# EUROPEAN PATENT APPLICATION

(11) **EP 4 443 084 A1**
(43) Date of publication of application: **09.10.2024**
(21) Application number: 22897411.9
(22) Date of filing: 10.10.2022
(51) Int. Cl.: F25D 23/12, A23L 5/30, A23L 13/00

(54) **REFRIGERATOR AND ULTRASONIC TREATMENT DEVICE THEREOF**

(30) Priority: 29.11.2021 CN 202111433613
(71) Applicant: Qingdao Haier Refrigerator Co., Ltd., Laoshan District Qingdao Shandong 266101 (CN); Haier Smart Home Co., Ltd., Qingdao, Shandong 266101 (CN)
(72) Inventor: WANG, Jing, Qingdao, Shandong 266101 (CN); FEI, Bin, Qingdao, Shandong 266101 (CN); ZHAO, Bintang, Qingdao, Shandong 266101 (CN); WANG, Liyan, Qingdao, Shandong 266101 (CN); SUN, Hao, Qingdao, Shandong 266101 (CN)
(74) Representative: Winter, Brandl - Partnerschaft mbB
(86) International application number: PCT/CN2022/124382
(87) International publication number: WO 2023/093326

(57) **Abstract**

A refrigerator and an ultrasonic treatment device thereof. The ultrasonic treatment device comprises: a container, which is configured to accommodate a food material to be treated; a bottom plate, which is arranged at the bottom of the container, with at least one ultrasonic protusion being formed on an upper surface of the bottom plate; and at least one ultrasonic transducer, which is configured to controllably apply ultrasound to the bottom plate. By means of the ultrasonic treatment device, the food material can be tasted quickly and uniformly, and the food material is fresh and succulent and tastes relatively good after pickling.

## Description

### TECHNICAL FIELD

The present application relates to the field of refrigeration technology, and in particular to a refrigerator and an ultrasonic processing device thereof.

### BACKGROUND ART

In recent years, with changes in people's dietary habits, marinating has become an essential step in the meat processing industry. Traditional marinating methods involve rubbing meat surfaces until juices seep out, then layering the meat in a container with salt evenly sprinkled between layers and compacted, either under pressure or not, relying on the juices to form a saline solution for marination. However, this method is slow, provides uneven flavor absorption, and often results in poor texture in the marinated meat, thus needing improvement.

### SUMMARY

In a first aspect, an objective of the present application is to enable rapid, even flavor absorption in food ingredients, resulting in marinated food that is tender, juicy, and has a good texture.

In the first aspect, a further objective of the present application is to improve the speed of flavor absorption and the tenderness of the food ingredients.

In a second aspect, an objective of the present application is to provide a refrigerator.

Particularly, according to the first aspect of the present application, the present application provides an ultrasonic processing device, including:
a container for holding food ingredients to be treated;
a baseplate located at a bottom of the container, with an upper surface forming at least one ultrasonic protrusion; and
at least one ultrasonic transducer, configured to apply ultrasonic vibrations to the baseplate in a controlled manner.

Alternatively, the ultrasonic protrusion is a combination of one or more structural forms selected from a cone-shaped structure, a needle-shaped structure, an X-shaped structure, a Y-shaped structure, and a triangular prism-shaped structure.

Alternatively, when the ultrasonic protrusion is cone-shaped, a cone angle of the ultrasonic protrusion is 10° to 170°, with a height of ≤20mm.

Alternatively, the baseplate and the container are of an integrated structure, the baseplate forming the bottom of the container.

Alternatively, the baseplate and the container are of a detachable structure, the baseplate being attached and fixed to an upper surface of a bottom of the container.

Alternatively, a conducting material is set between the baseplate and the bottom of the container.

Alternatively, the ultrasonic protrusion is formed by protruding upwards from a body of the baseplate.

Alternatively, the ultrasonic protrusion is of a solid structure, fixed to the upper surface of the baseplate.

Alternatively, several ultrasonic protrusions are set, with several ultrasonic protrusions being arranged in a matrix manner on the upper surface of the baseplate.

Alternatively, several ultrasonic protrusions are set, with several ultrasonic protrusions radiating from a center of the baseplate towards a periphery of the baseplate.

Alternatively, the ultrasonic transducer is glued and fixed to the bottom of the baseplate, or is tightened to the bottom of the baseplate by screws.

Alternatively, the ultrasonic processing device further includes:
a liquid storage box, the liquid storage box being fixed to the bottom of the baseplate, the ultrasonic transducer being fixed to a bottom of the liquid storage box, with the liquid storage box containing a cooling medium.

Alternatively, a power of the ultrasonic transducer is 30W to 600W, and a frequency is 19KHz to 500KHz.

Alternatively, a power of the ultrasonic transducer (200) is 40W to 300W, and a frequency is 35KHz to 75KHz.

According to the second aspect of the present application, a refrigerator is provided. The refrigerator includes a cabinet that defines a storage compartment, the storage compartment is equipped with any one of the above ultrasonic processing device.

The refrigerator and the ultrasonic processing device of the present application can coat a surface of meat ingredients with salt or marinade, place the food ingredients in a container, and then apply ultrasonic vibrations through a transducer to the baseplate, causing the food ingredients to vibrate and accelerating a penetration and diffusion of the salt or marinade. Ultrasonic protrusions on the baseplate not only increase a contact area between the food ingredients and the baseplate but also disrupt a fibrous structure of the food ingredients, making it looser. Compared to traditional dry marination, the present application significantly speeds up the marination process and results in marinated food that is tender, juicy, and tasty.

Further, the ultrasonic protrusions of the refrigerator and the ultrasonic processing device are preferably cone-shaped, with a cone angle of 10° to 170° and a height of ≤20mm.When the ultrasonic transducer applies ultrasound to the bottom plate, the cone-shaped protrusions can pierce a surface of the food ingredients, and form puncture holes on the surface of the food ingredients, the marinade can be more convenient through the puncture holes into the interior of the food ingredients, not only to speed up the marinade speed, but also to make the food ingredients uniformly flavored, and the fibers of the food ingredients are broken, the meat is more smooth and tender.

The aforesaid and other objectives, advantages and features of the present application will be more apparent to those skilled in the art from the following detailed description of the specific embodiments of the present application with reference to the accompanying drawings.

### BRIEF DESCRIPTION OF THE DRAWINGS

Various other advantages and benefits will be apparent to those of ordinary skill in the art by reading detailed descriptions of the preferred embodiments below. The accompanying drawings are only for the purpose of illustrating the preferred embodiments and shall not be construed as limitations to the present application. In addition, the same reference numbers are used to represent the same components throughout the drawings, in which:
FIG. 1 is a schematic structural diagram of an ultrasonic processing device according to an embodiment of the present application;
FIG. 2 is a sectional view of the ultrasonic processing device according to an embodiment of the present application;
FIG. 3 is a schematic structural diagram of an ultrasonic protrusion according to an embodiment of the present application;
FIG. 4 is a schematic structural diagram of a baseplate and a container with a detachable design according to an embodiment of the present application;
FIG. 5 is a layout diagram of ultrasonic protrusions according to an embodiment of the present application;
FIG. 6 is a layout diagram of ultrasonic protrusions according to another embodiment of the present application;
FIG. 7 is a layout diagram of ultrasonic protrusions according to yet another embodiment of the present application;
FIG. 8 is a sectional view of the ultrasonic processing device according to another embodiment of the present application.

### DETAILED DESCRIPTION OF EMBODIMENTS

Exemplary embodiments of the present disclosure will be described in more detail below with reference to the accompanying drawings. However, although the exemplary embodiments of the present disclosure are shown in the drawings, it should be understood that the present disclosure may be implemented in various ways and shall not be limited by the embodiments set forth herein. On the contrary, these embodiments are provided for more thorough understanding of the present disclosure, and can fully convey the scope of the present disclosure to those skilled in the art.

The present application provides an ultrasonic processing device for refrigerators and a refrigerator including the ultrasonic processing device.

A refrigerator typically includes a cabinet that forms one or more storage compartments. Depending on the cooling temperature, the storage compartments can be configured as refrigerated storage compartments, frozen storage compartments, or variable temperature storage compartments. Specifically, the functionality, number, and layout of the storage compartments can be configured according to actual needs.

An ultrasonic processing device is installed in the storage compartment, it is to be noted that the ultrasonic processing device of the present application is mainly used for ultrasonically tenderizing meat, and the food ingredients are mainly meat. Without departing from the principles of the present application, those skilled in the art can apply the present application to other scenarios, such as ultrasonic cleaning, ultrasonic marination (wet marination), and ultrasonic freezing, etc.

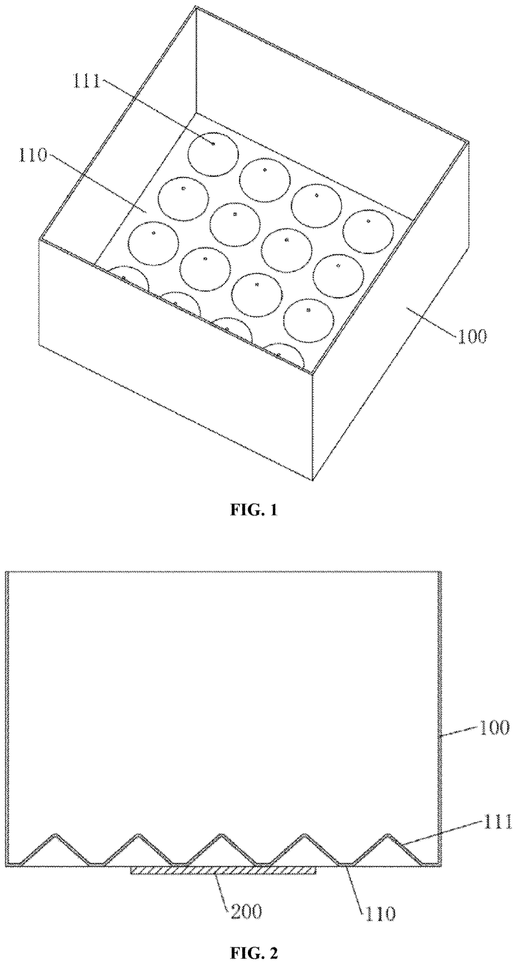

FIG. 1 is a schematic structural diagram of an ultrasonic processing device according to an embodiment of the present application; FIG. 2 is a sectional view of the ultrasonic processing device according to an embodiment of the present application. Referring to FIG. 1 and FIG. 2, the ultrasonic processing device includes a container 100, a baseplate 110, and at least one ultrasonic transducer 200. The container 100 has an open top for holding the food ingredients to be treated. The baseplate 110 is located at the bottom of the container 100, with upper surface forming at least one ultrasonic protrusion 111. The ultrasonic transducer 200 is configured to apply ultrasonic vibrations to the baseplate 110 in a controlled manner.

The ultrasonic processing device of this embodiment of the present application, having the container 100, the baseplate 110, and the ultrasonic transducer 200, in carrying out meat tenderizing process, surface of meat ingredients can first be coated with salt or marinade, and then the food ingredients are placed in the container 100, followed by controlling the ultrasonic transducer 200 to apply an ultrasonic action to the baseplate 110, which causes the food ingredients to continuously tremble and accelerates the penetration and diffusion of the salt or marinade. Due to the ultrasonic protrusions 111 on the baseplate 110, not only is a contact area between the food ingredients and the baseplate 110 increased, but a fibrous structure of the food ingredients is also disrupted, making them looser. Compared to traditional dry marination, using this embodiment of the present application for marinating food ingredients not only significantly improves the speed of marination but also results in marinated food that is tender, juicy, and has a better taste.

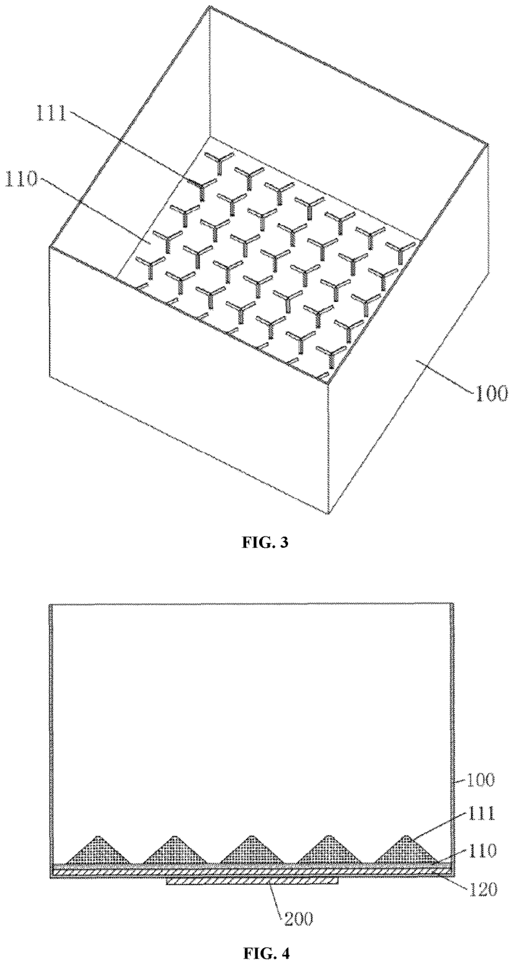

The ultrasonic projection 111 may be one of a cone-shaped structure, a needle-shaped structure, an X-shaped structure, a Y-shaped structure, a triangular prism-shaped structure, or a combination of more than one structural form of the cone-shaped structure, the needle-shaped structure, the X-shaped structure, the Y-shaped structure, and the triangular prism-shaped structure. FIG. 1 and FIG. 3 respectively show the cone-shaped and Y-shaped structures of the ultrasonic protrusion 111. Of course, the ultrasonic protrusion 111 can also be of other shapes, such as S-shaped, prism-shaped, snowflake-shaped, etc.

In this embodiment, the ultrasonic protrusion 111 is preferably of the cone-shaped structure, with a cone angle of 10° to 170° and a height of ≤20mm. When the ultrasonic transducer 200 applies ultrasonic vibrations to the baseplate 110, the cone-shaped structure of the ultrasonic protrusion 111 can pierce surface of the food ingredients and form punctures on the surface, through which the marinade can easily enter into the food ingredients, which not only accelerates the marination process but also ensures even flavor absorption. After the fibers of the food ingredients are broken, the texture becomes even more tender.

Referring to FIG. 2, in an optional embodiment, the baseplate 110 and the container 100 can be of an integrated structure, with the baseplate 110 forming a bottom of the container 100. Since the baseplate 110 and the container 100 are of an integrated structure, a connection strength between the baseplate 110 and walls of the container 100 is high, which reduces the likelihood of fractures during an application of ultrasonic vibrations, thereby extending a lifespan of the container 100. The ultrasonic protrusion 111 is formed by protruding upwards from a body of the baseplate 110. This method of forming the ultrasonic protrusion 111 results in an internal hollow structure, which can be directly formed by stamping with an appropriate mold in the production process, making it easy to manufacture and cost-effective.

Referring to FIG. 4, in another optional embodiment, the baseplate 110 and the container 100 can also have a detachable structure, with the baseplate 110 attached and fixed to an upper surface of a bottom of the container 100. Since the baseplate 110 and the container 100 are of a detachable structure, it facilitates a removal and placement of the baseplate 110, making it convenient to clean the baseplate 110 after tenderizing the meat, thus preventing any residual marinade on the baseplate 110 from contaminating the meat during a next tenderization process. The ultrasonic protrusion 111 can be of a solid structure, directly fixed to the upper surface of the baseplate 110. Although a solid structure of the ultrasonic protrusion 111 is not prone to deformation, a manufacturing process is relatively complex, and a production cost is slightly higher.

Considering a possibility of a gap between the baseplate 110 and the bottom of the container after the baseplate 110 is fixed, which could affect a transmission of ultrasound, a conductive material 120 can be placed between the baseplate 110 and the bottom of the container to mitigate this issue. The conductive material 120 can be water or another liquid or semi-liquid medium, used to fill the gap between the baseplate 110 and the bottom of the container, and has a certain ultrasonic conductivity to allow stable transmission of ultrasonic waves.

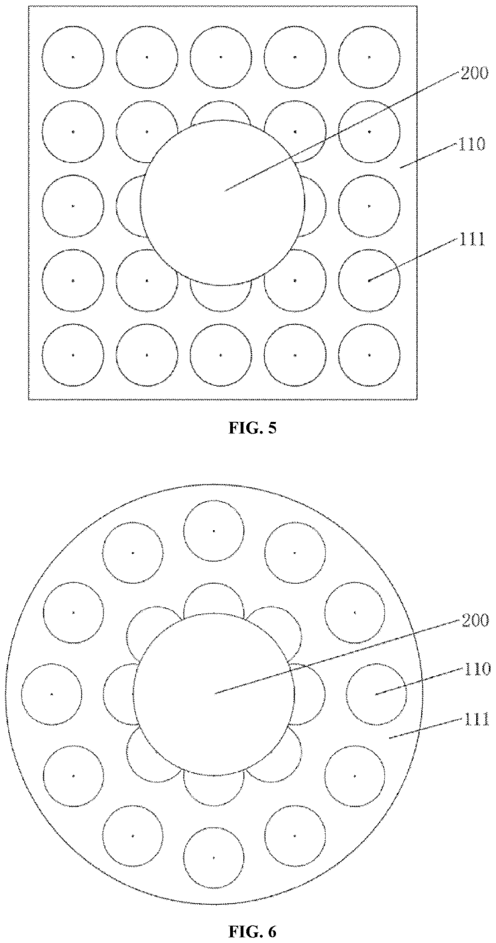

FIG. 5 is a layout diagram of the ultrasonic protrusions 111 according to an embodiment of the present application. FIG. 6 is a layout diagram of the ultrasonic protrusions 111 according to another embodiment of the present application. As shown in FIG. 5, the baseplate can be rectangular, with several ultrasonic protrusions 111 arranged in a matrix manner on the upper surface of the baseplate 110. Referring to FIG. 6, the baseplate can also be circular, with the ultrasonic protrusions 111 radiating from a center of the baseplate 110 to a periphery. Both layout methods can ensure that an ultrasonic effect is evenly transmitted to the food ingredients, ensuring a uniformity of tenderization.

The ultrasonic transducer 200 can be glued and fixed to the bottom of the baseplate 110, or tightened to the bottom of the baseplate 110 with screws. Of course, there can be multiple ways to fix the ultrasonic transducer 200, and this embodiment of the present application does not limit them.

In a preferred embodiment, several ultrasonic protrusions 111 are set, all protruding upwards from the body of the baseplate 110, with only one ultrasonic transducer 200 being set and fixed to the bottom of the baseplate 110 by gluing. It is noteworthy that when only one ultrasonic transducer 200 is set, the size of the ultrasonic transducer 200 should be relatively large. During the gluing process, the container 100 should be inverted first, and then glue should be filled into each ultrasonic protrusion 111 within the pre-fixed area of the ultrasonic transducer 200 to prevent gaps between the ultrasonic transducer 200 and the ultrasonic protrusions 111, promoting a effective transmission of the ultrasonic effect.

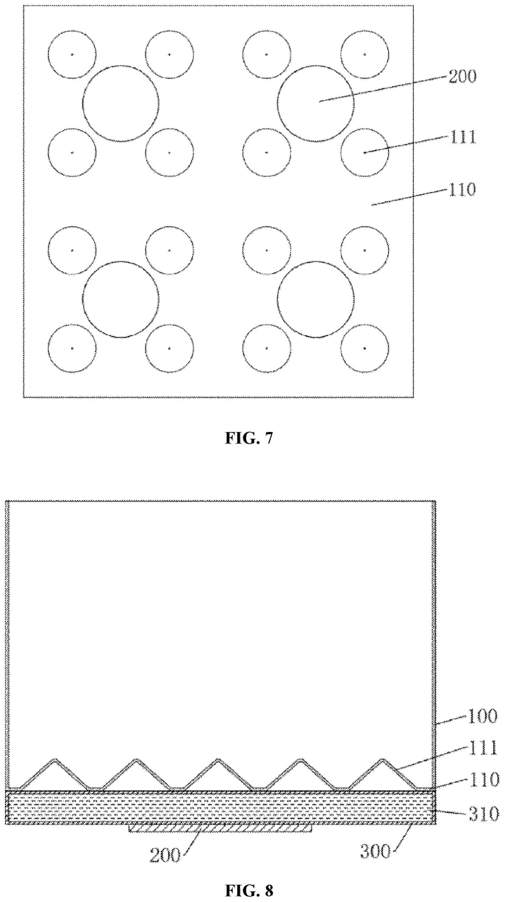

Referring to FIG. 7, in some alternative embodiments, several ultrasonic protrusions 111 are set and evenly arranged into multiple groups, with four protrusions per group in a matrix arrangement. Correspondingly, a number of the ultrasonic transducers 200 matches a number of groups of the ultrasonic protrusions 111, with each ultrasonic transducer 200 being fixed to the bottom of the baseplate 110 located between the four ultrasonic protrusions 111 of each group.

Referring to FIG. 8, in this embodiment, the ultrasonic processing device can also include a liquid storage box 300, fixed to a bottom of the baseplate 110, with the ultrasonic transducer 200 fixed to a bottom of the liquid storage box 300, and the liquid storage box 300 containing a cooling medium 310. The ultrasonic transducer 200 generates heat during long-term operation. By setting the liquid storage box 300 between the ultrasonic transducer 200 and the baseplate 110 and filling the liquid storage box 300 with the cooling medium 310, the cooling medium 310 not only allows for the transmission of ultrasonic waves but also cools the ultrasonic transducer 200, preventing overheating damage to the ultrasonic transducer 200 and also preventing the heat generated by the ultrasonic transducer 200 from being transmitted to the baseplate 110, avoiding affecting the tenderizing effect.

In this embodiment, a power of the ultrasonic transducer 200 can be 30W to 600W, and a frequency can be 19KHz to 500KHz. Preferably, the power of the ultrasonic transducer 200 is 40W to 300W, and the frequency is 35KHz to 75KHz. Through actual use of the prototype, it was found that the ultrasonic processing device has a better tenderizing effect and faster tenderizing speed at a preferred power and frequency, which can be accepted by a wide range of users.

Based on any one of the optional embodiments or a combination of multiple optional embodiments mentioned above, the embodiments of the present application can achieve the following beneficial effects:

The refrigerator and the ultrasonic processing device of the present application, during the tenderizing process, can first coat the surface of meat ingredients with salt or marinade before placing them inside the container 100. Then, by controlling the ultrasonic transducer 200 to apply ultrasonic vibrations to the baseplate 110, the food ingredients continuously vibrate, which accelerates the penetration and diffusion of the salt or marinade. Due to the ultrasonic protrusions 111 on the baseplate 110, which not only increase the contact area between the food ingredients and the baseplate 110 but also disrupt the fibrous structure of the food ingredients, making them looser. Compared to traditional dry marination, marinating food ingredients using this embodiment of the present application not only significantly improves the speed of marination but also results in marinated food that is tender, juicy, and has a better taste.

Furthermore, the refrigerator and the ultrasonic processing device of the present application, where the ultrasonic protrusion 111 is preferably of the cone-shaped structure, with the cone angle of 10° to 170° and the height of ≤20mm. When the ultrasonic transducer 200 applies ultrasonic vibrations to the baseplate 110, the cone-shaped structure of the ultrasonic protrusion 111 can pierce the surface of the food ingredients and form punctures, through which the marinade can easily enter the ingredients. This not only accelerates the marination process but also ensures even flavor absorption. After the fibers of the food ingredients are broken, the meat becomes even more tender.

Therefore, those skilled in the art should appreciate that although multiple exemplary embodiments of the present application have been illustrated and described in detail, many other variations or modifications that accord with the principle of the present application may be still determined or derived directly from the content disclosed by the present application without departing from the spirit and scope of the present application. Thus, the scope of the present application should be understood and deemed to include all these and other variations or modifications.

## Claims

1. An ultrasonic processing device, comprising:
a container for holding food ingredients to be treated;
a baseplate located at a bottom of the container, with an upper surface forming at least one ultrasonic protrusion; and
at least one ultrasonic transducer, configured to apply ultrasonic vibrations to the baseplate in a controlled manner.

2. The ultrasonic processing device according to claim 1, wherein
the ultrasonic protrusion is a combination of one or more structural forms selected from a cone-shaped structure, a needle-shaped structure, an X-shaped structure, a Y-shaped structure, and a triangular prism-shaped structure.

3. The ultrasonic processing device according to claim 2, wherein
when the ultrasonic protrusion is cone-shaped, a cone angle of the ultrasonic protrusion is 10° to 170°, with a height of ≤20mm.

4. The ultrasonic processing device according to any one of claims 1 to 3, wherein
the baseplate and the container are of an integrated structure, the baseplate forming the bottom of the container.

5. The ultrasonic processing device according to any one of claims 1 to 3, wherein
the baseplate and the container are of a detachable structure, the baseplate being attached and fixed to an upper surface of a bottom of the container.

6. The ultrasonic processing device according to claim 5, wherein
a conducting material is set between the baseplate and the bottom of the container.

7. The ultrasonic processing device according to any one of claims 1 to 3, wherein
the ultrasonic protrusion is formed by protruding upwards from a body of the baseplate.

8. The ultrasonic processing device according to any one of claims 1 to 3, wherein
the ultrasonic protrusion is of a solid structure, fixed to the upper surface of the baseplate.

9. The ultrasonic processing device according to any one of claims 1 to 3, wherein
several ultrasonic protrusions are set, with several ultrasonic protrusions being arranged in a matrix manner on the upper surface of the baseplate.

10. The ultrasonic processing device according to any one of claims 1 to 3, wherein
several ultrasonic protrusions are set, with several ultrasonic protrusions radiating from a center of the baseplate towards a periphery of the baseplate.

11. The ultrasonic processing device according to any one of claims 1 to 3, wherein
the ultrasonic transducer is glued and fixed to the bottom of the baseplate, or is tightened to the bottom of the baseplate by screws.

12. The ultrasonic processing device according to any one of claims 1 to 3, further comprising:
a liquid storage box, the liquid storage box being fixed to the bottom of the baseplate, the ultrasonic transducer being fixed to a bottom of the liquid storage box, with the liquid storage box containing a cooling medium.

13. The ultrasonic processing device according to any one of claims 1 to 3, wherein
a power of the ultrasonic transducer is 30W to 600W, and a frequency is 19KHz to 500KHz.

14. The ultrasonic processing device according to any one of claims 1 to 3, wherein
a power of the ultrasonic transducer is 40W to 300W, and a frequency is 35KHz to 75KHz.

15. A refrigerator, comprising a cabinet that defines a storage compartment, wherein the storage compartment is equipped with an ultrasonic processing device according to any one of claims 1 to 14.
